# EUROPEAN PATENT SPECIFICATION

(11) **EP 3 225 459 B1**
(45) Date of publication and mention of the grant of the patent: **27.01.2021**
(21) Application number: 17161333.4
(22) Date of filing: 16.03.2017
(51) Int. Cl.: B60N 2/70, B60N 2/68

(54) **SEAT BACK FOR VEHICLE**
SITZLEHNE FÜR EIN FAHRZEUG
DOSSIER DE SIÈGE POUR VÉHICULE

(30) Priority: 01.04.2016 GB 201605554
(43) Date of publication of application: 04.10.2017
(73) Proprietor: MIRUS Aircraft Seating Ltd., Hingham, Norfolk NR9 4LF (GB)
(72) Inventor: HALL, Phil, Hingham, Norfolk NR9 4LF (GB); McGuire, Ben, Hingham, Norfolk NR9 4LF (GB)
(74) Representative: Haseltine Lake Kempner LLP

(56) References cited:
- WO-A1-2006/102751
- WO-A1-2013/144622
- US-A1- 2004 084 937

## Description

The present invention relates to a seat back assembly. In particular, the present invention relates to a seat back or seat back assembly for a vehicle such as an aircraft.

Seat backs or seat back assemblies for providing support to a seat occupant are well known. The provision of suitable support as well as softness to various regions of the back is important to limit the likelihood of harm or discomfort to a seat occupant.

There are certain qualities that it is desirable for a seat back assembly intended to form a part of a seat, in particular a vehicle seat, to possess. For example, a seat back assembly will ideally provide both comfort and support to a person occupying the seat. Comfort is a particularly relevant factor for a vehicle seat, such as an aircraft seat, which may be occupied by a person for a significant duration. Known aircraft seats for example provide a seat back assembly having a rigid support frame at least partially covered with a cushioning layer of fabric. The rigid support frame, which must provide significant structural support to seat occupant in use, may be anchored in position e.g. by connecting to the base of the seat and/or the floor of the vehicle. The disadvantage of known seat back configurations is that as they are usually relatively heavy, which is particularly undesirable in a vehicle such as an aircraft Document WO2013/144622 discloses an aircraft seat comprising a seat cushion and a seat back assembly, wherein the cushion is made up of at least two different foam parts.

Seating systems intended for use in aircrafts preferably possess other qualities or characteristics which are particularly appropriate for the aircraft environment. For example they may preferably exhibit a high degree of energy absorption for impact resistance, and may also have the ability to float in water. Additionally, aircraft seats may incorporate fire retardant features or properties to reduce the spread of a potential fire. A seat back assembly intended for use as part of an aircraft seating system must pass rigorous safety tests to ensure that it is sufficiently strong and/or robust to withstand, not just heavy duty use, but also potentially extreme conditions such as may arise in the event of the aircraft impacting with another object.

Furthermore, in the case of air travel, the airplane typically flies with the nose of the aircraft tilted upwardly. As a result, the weight of a seat occupant's body tends to be transferred to the lower back, potentially leading to, or antagonising, back injury or pain. Thus, the need for seat back assemblies to provide an appropriate support surface arises.

Although numerous seat back designs are known, there is still a need to improve the previously proposed designs, in particular to provide a seat back assembly for a vehicle seat which is more lightweight and yet is sufficiently robust to be suitable, in particular, for an aircraft seating assembly.

Embodiments of the present invention seek to provide an improved seat back for a vehicle seat, in particular for an aircraft seating system.

According to a first aspect of the present invention there is provided a seat back assembly according to claim 1.

Thus, according to embodiments of the present invention, which include a first foam support structure for providing structural support to the seat back assembly, the structural support required for a seat back assembly is at least partially provided by the first foam support structure. As a result, the overall weight of the seat back assembly is significantly reduced as compared to previously proposed designs wherein all of the structural support is provided by a support frame. Thus, the first, foam, support structure preferably exhibits sufficient rigidity to be self-supporting when configured and/or disposed to form a seat back assembly of a vehicle seat, and to support the weight of a user in use.

It will be appreciated that different foams have different densities and varying degrees of firmness, shape-memory and rigidity. A further advantage of using a foam material to form the first structure against which a seat occupant will lean or rest in use is that the properties of the foam - e.g. the density and/or the surface firmness/compressibility - can be selected according to the required performance of the seating assembly in terms of firmness (i.e. how the foam yields to weight and pressure) and/or rigidity and/or viscosity and/or shape memory. Both density and firmness are important indicators of foam performance in relation to comfort, support and durability. Different foam materials exhibit different moulded densities and also provide different degrees of firmness, or compressibility, to a user. It is important to appreciate that foam surface firmness is a value that is independent of foam density. The density refers to the weight of the foam in kg per cubic metre. Thus, the foam material is preferably selected to provide a back support having appropriate support and softness. An example of a suitable material for the first foam structure is expanded polypropylene or EPP. EPP foam is available in a range of densities. Preferred embodiments of the present invention utilise EPP foam having a density of between 30g/litre and 65g/litre. Particularly preferred embodiments of the present invention utilise EPP foam having a density of between 45g/litre and 60g/litre. Preferably, the firmness of the first, foam structure is greater than 200N.

A further advantage of embodiments of the present invention arises as a result of the foam support structure being capable of being moulded to a particular shape. Thus, according to preferred embodiments, the first foam structure is shaped during manufacture allowing the surface geometry of the foam structure to be manipulated to offer enhanced support and/or comfort. This enables the surface geometry to be selected according to a particular customer's requirements.

Thus, the seat back assembly provides a support surface provided by the first, foam, structure that is adapted/configured to receive a user. Preferably, the foam support structure is ergonomically shaped and/or sized and/or configured to provide a support surface upon which a user may lean when sitting in a seat comprising the seat back assembly. Embodiments of the present invention advantageously provide a lightweight seat-back assembly that is customisable, easy to manufacture and relatively inexpensive.

According to one embodiment the seat back assembly further comprises a second support structure. The second support structure may comprise a rigid frame. The frame may be formed of a rigid plastic, metal or may comprise a composite. The seat back assembly may further comprise a rigid back panel which forms a cover such that the frame may be disposed between the foam support structure and the rigid panel.

The rigid panel may form a rear surface of the seat back assembly in use and may, for example, be conveniently formed of moulded plastic.

The foam support structure may be, for example, mechanically connected to a seat base and or to a second support structure such as a frame structure and/or to a back panel or cover by a variety of means, including e.g. inter-engaging means, bolts, or Velcro. Embodiments of the present invention are also envisaged in which a second support structure is partially or completely encapsulated within the first, foam, support structure. This arrangement is particularly advantageous since it adds additional strength and/or structure to the foam structure but allows the seat back assembly to be distributed and sold as a single element. The encapsulated support structure may protrude from the body of the foam support structure to facilitate connection to e.g. a seat base or the vehicle floor.

According to one embodiment, the moulded density of the foam structure varies between different regions of the structure. Thus, according to one embodiment the foam structure comprises first and second regions, the first region comprising a moulded density that is higher than the moulded density of the second region. Thus, for example, the first region may be provided at a position corresponding to the lower back of an occupant in use whilst the second region may be provided at a position corresponding to the upper back of an occupant in use. One or more properties of the foam in the first and second region may appropriately selected depending on the particular requirements of a seating assembly incorporating the foam structure in use. For example, the first region - which may comprise the majority of the seat back assembly - may be formed from foam selected to provide a relatively high degree of support to the occupant whilst the properties of the foam in the second region - which may be a smaller region provided e.g. in the lumber region of the seat - may be selected so as to provide a greater surface compression.

Alternatively, the moulded density of the foam structure may be substantially the same throughout the foam structure.

The thickness of the first support structure also varies between the first and second regions and/or between third and fourth regions (i.e. thickness variation my correlate with density variation or may vary independently). Thus, the first region which is provided at a position corresponding to the lower back of an occupant in use may have a thickness that is greater than the thickness of the foam structure at a position corresponding to the upper back of an occupant in use so as to provide better support in the lumber region.

According to the invention the foam structure comprises first and second regions, wherein the moulded density of the first region is different to the moulded density of the second region. Additionally, or alternatively, the foam structure comprises third and fourth regions, wherein the surface compressibility of the third region is different to the surface compressibility of the fourth region. Preferably the first and second regions and/or the third and fourth regions are integrally formed.

According to one embodiment of the present invention the foam structure is shaped to provide a support surface for a seat occupant in use. As a consequence of forming the first support structure from a foam material that is readily mouldable, it is possible to shape the panel so as to generally conform to a contour of an occupant's upper body and/or back. Thus, the thickness and/or geometry of the foam support structure can be selected so as to generally conform to the contour of an occupant's back.

According to a preferred embodiment the foam structure may comprise a headrest region. Additionally or alternatively, the foam structure exhibits fire resistive properties. Thus, the foam material itself may exhibit inherent fire resistive properties, and/or may be treated to exhibit fire resistive properties and/or may be covered in a fire resistive fabric.

Preferably, fire-retardant material is provided so as to substantially extend around the outer surface of the foam structure thereby providing enhanced fire-protection properties. The fire retardant material may, for example, comprise a fire-block fabric.

The seat back assembly may further comprise a cover, or trim, which may be selected for aesthetic reasons and may be any material such as e.g. leather or a synthetic material. The cover extends around at least a part of the outer surface of the foam structure.

According to a third aspect of the present invention there is provided a method of manufacturing a seat back assembly according to claim 14.

The method may further comprise securing the first, foam, structure relative to a second support structure such that the foam structure is arranged to provide a support surface against which the upper body and/or back of a user rests in use.

According to the invention the step of forming a foam structure comprises forming two or more regions having different foam density and/or firmness. This may be achieved, for example, by compressing the foam mixture prior to curing to reduce the volume of the foam mixture, and thus increase the density, in a particular region.

The method preferably involves moulding the foam structure to have a desired shape and/or geometry. This may be achieved by manipulating the foam material when fluid or by utilising a suitable shaped container, or mould, in which the foam will set/cure. The foam structure may comprise in-mould features which are added as part of the manufacturing/moulding process.

According to a fourth aspect of the present invention there is provided a seat having a seat back assembly according to the first aspect.

According to a fifth aspect of the present invention there is provided a vehicle, vessel and/or aircraft having a seat according to the fourth aspect.

For a better understanding of the present invention, and to show how the same may be carried into effect, reference will now be made by way of example to the accompanying drawings in which:
Figure 1 shows a schematic illustration of a seat back assembly according to an embodiment of the present invention;
Figure 2 shows a cross-sectional view of a seat back assembly according to a second example embodiment;
Figure 3a shows a row of aircraft seats each comprising a seat back assembly according to another example embodiment of the present invention;
Figure 3b shows a schematic view of the seat back assembly comprised in the row of aircraft seats shown in Figure 3a;
Figures 4a to 4e show various views of a seat back comprising a foam structure according to a further example embodiment.

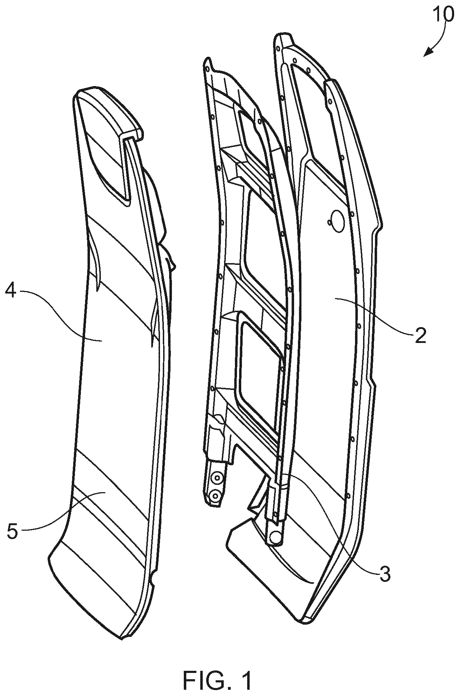

**Figure 1** shows a schematic illustration of a seat back assembly according to an embodiment of the present invention. The seat back assembly, generally designated 10, comprises a rigid back panel 2, a support frame 3 and a foam support structure 4. The frame 3 forms a second support structure of the seat back assembly. An engagement mechanism (not shown) is provided to allow the foam structure to be connected to the frame. For example, the engagement mechanism may comprise inter-engaging elements respectively located on the foam structure and the frame. An engagement mechanism (not shown) is also provided to allow the rigid back panel to be connected to the foam support structure 4and/or the support frame 3.

In this example, the rigid back panel 2 comprises moulded plastic and forms a rear surface of "shell" of the seat assembly. The support frame 3 may be made of any suitable metal, plastic or composite. The foam structure 4 is formed of expanded polypropylene having a density of around 55g/litre.

In this particular example, and in order to provide superior lumber support in the region corresponding to the lower back of an occupant in use, the foam structure comprises a first region 5 which exhibits a foam density and a firmness value that is greater than the foam density and the firmness values associated with the rest of the panel.

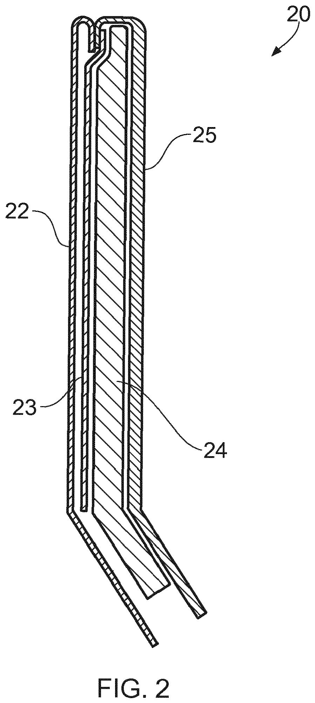

**Figure 2** shows a cross-sectional view of a seat back assembly, generally designated 20, according to a second example embodiment. The seat back assembly comprises a rigid back panel 22, a support frame 23 and a foam structure 24. The frame 23 forms a second support structure of the present invention. In this example, the seat assembly is further provided with a cover 25 which extends over the support surface of the seating assembly and is folded at a top portion thereof and secured to the rigid support structure. Thus, the foam structure is effectively secured in place, relative to the support frame 23 which forms a component of the rigid support structure in this embodiment, by the cover 25.

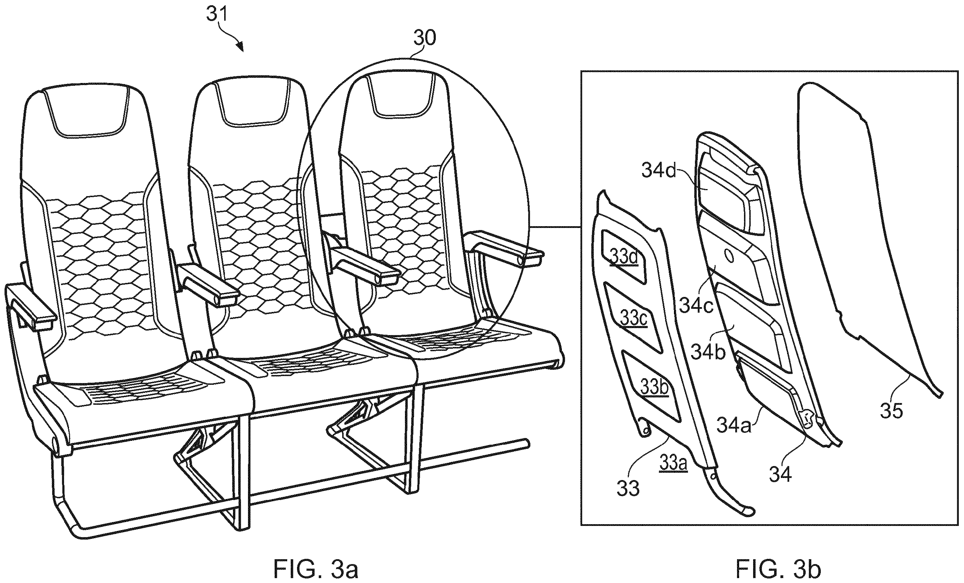

**Figure 3a** shows a row of aircraft seats 31 each comprising a seat back assembly 30 according to another example embodiment of the present invention. A schematic view of the seat back assembly 30 is shown in **Figure 3b** and comprises a support frame 33, a foam structure 34 and a cover 35. In this example embodiment the support frame 33 forms a second support structure of the present invention. The rear surface of the foam structure 34 exhibits a shaped profile comprising a series of projecting foam elements 34a - 34d. These projecting foam elements are formed during the moulding of the foam structure and serve to cooperate with apertures 33a - 33d provided in the support frame 33 in order to facilitate connection of the foam structure to the support frame and thereby secure the foam structure 34 relative to the support frame 33.

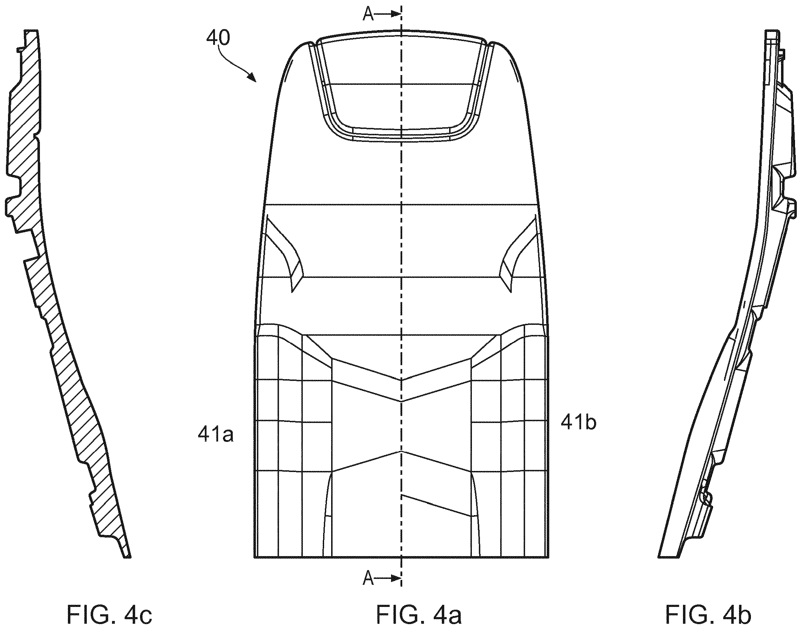

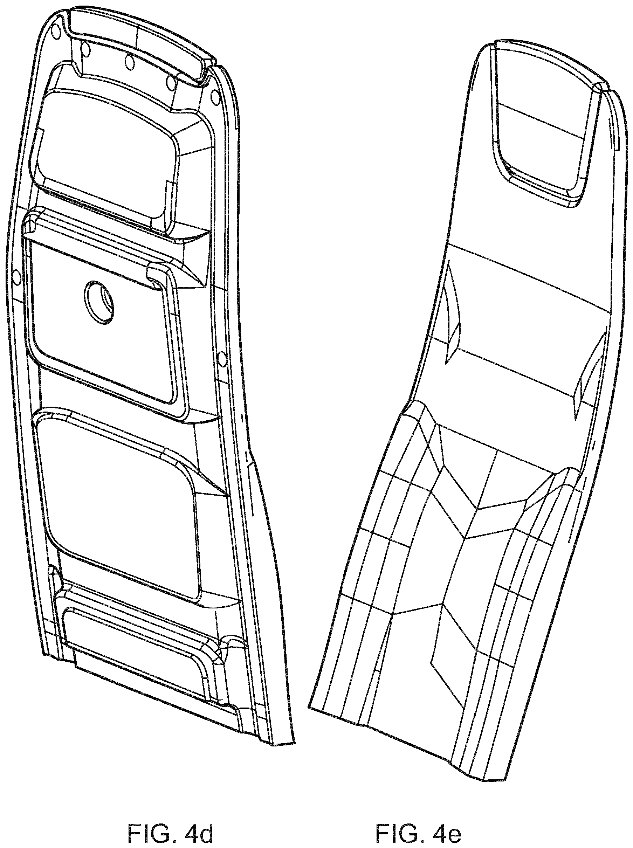

**Figure 4** shows a further example of a seat back assembly comprising a foam structure generally designated 40. Figure 4a shows a front view of the foam structure which exhibits a varied surface geometry as indicated by contour lines. Thus, either side of the centre-line A, and in the mid to lower portion of the seat back, the thickness of the foam structure increases towards the lateral side edges (41a and 41b) of the foam structure. This can be seen more clearly in Figure 4e which shows an elevational view of the foam structure. Figure 4b shows a side view of the foam structure and shows a number of surface features which are integrally formed during the moulding of the foam structure. Figure 4c shows a side-view cross-section of the foam structure whilst Figure 4d shows a rear elevation view of the foam structure.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

## Claims

1. A seat back assembly (10) comprising:
a first support structure (4), the first support structure (4) being made of a foam material and being configured to provide a support structure against which the upper body and/or back of a user rests in use, **characterised in that** the first support structure comprises first (5) and second regions, wherein the moulded density and thickness of the first region (5) is different to the moulded density and thickness of the second region, and wherein the first region is provided at a position corresponding to the lower back of an occupant in use, and the second region is provided at a position corresponding to the upper back of an occupant in use.

2. A seat back assembly (10) as claimed in claim 1, wherein the first support structure (4) comprises expanded polypropylene.

3. A seat back assembly (10) as claimed in claim 1 or 2, wherein the first support structure (4) has a moulded density of between 30g/litre and 65g/litre and/or a firmness of at least 200N.

4. A seat back assembly (10) as claimed in any preceding claim, wherein the seat back assembly further comprises a second support structure (3).

5. A seat back assembly (10) as claimed in claim 4, wherein the second support structure (3) comprises a rigid panel.

6. A seat back assembly (10) as claimed in claim 5, wherein the rigid panel comprises moulded plastic and/or a frame.

7. A seat back assembly (10) as claimed in claim 6, wherein the frame comprises carbon-fibre.

8. A seat back assembly (10) as claimed any preceding claim, wherein the first structure (4) comprises third and fourth regions, and wherein the surface compressibility of the third region is different to the surface compressibility of the fourth region.

9. A seat back assembly (10) as claimed in claim 8, wherein the first and second regions are integrally formed

10. A seat back assembly (10) as claimed in claim 8 or 9, wherein the third and fourth regions are integrally formed.

11. A seat back assembly (10) as claimed in any preceding claim, wherein the first support structure (4) exhibits fire resistive properties.

12. A seat back assembly (10) as claimed in any preceding claim, further comprising a cover which extends over at least a part of the surface of the first support structure (4).

13. A seat having a seat back assembly (10) according to any preceding claim.

14. A method of manufacturing a seat back, comprising:
forming a first support structure from a foam material, wherein the forming comprises forming a first and second regions from the foam material, wherein the moulded density and thickness of the first region is different to the moulded density and thickness of the second region ,and manipulating the foam material so as to have a selected shape and/or geometry, wherein the first region is provided at a position corresponding to the lower back of an occupant in use, and the second region is provided at a position corresponding to the upper back of an occupant in use.

15. A method as claimed in claim 14 further comprising securing the first support structure relative to a second support structure such that the foam structure is arranged to provide a support structure against which the upper body and/or back of a user rests in use.

## Patentansprüche

1. Sitzlehnenanordnung (10), umfassend:
eine erste Stützstruktur (4), wobei die erste Stützstruktur (4) aus einem Schaumstoffmaterial hergestellt und konfiguriert ist, um eine Stützstruktur bereitzustellen, gegen die der Oberkörper und/oder Rücken eines Benutzers in der Verwendung ruht, **dadurch gekennzeichnet, dass** die erste Stützstruktur einen ersten (5) und einen zweiten Bereich umfasst, wobei sich die geformte Dichte und Stärke des ersten Bereichs (5) von der geformten Dichte und Stärke des zweiten Bereichs unterscheidet, und wobei der erste Bereich an einer Position entsprechend dem unteren Rücken eines Insassen in der Verwendung bereitgestellt ist, und der zweite Bereich an einer Position entsprechend dem oberen Rücken eines Insassen in der Verwendung bereitgestellt ist.

2. Sitzlehnenanordnung (10) gemäß Anspruch 1, wobei die erste Stützstruktur (4) expandiertes Polypropylen umfasst.

3. Sitzlehnenanordnung (10) gemäß Anspruch 1 oder 2, wobei die erste Stützstruktur (4) eine geformte Dichte zwischen 30 g/Liter und 65 g/Liter und/oder eine Festigkeit von mindestens 200 N aufweist.

4. Sitzlehnenanordnung (10) gemäß einem vorherigen Anspruch, wobei die Sitzlehnenanordnung ferner eine zweite Stützstruktur (3) aufweist.

5. Sitzlehnenanordnung (10) gemäß Anspruch 4, wobei die zweite Stützstruktur (3) eine starre Platte umfasst.

6. Sitzlehnenanordnung (10) gemäß Anspruch 5, wobei die starre Platte geformtem Kunststoff und/oder einen Rahmen umfasst.

7. Sitzlehnenanordnung (10) gemäß Anspruch 6, wobei der Rahmen Kohlefaser umfasst.

8. Sitzlehnenanordnung (10) gemäß einem vorherigen Anspruch, wobei die erste Struktur (4) einen dritten und einen vierten Bereich umfasst und wobei die Oberflächenkompressibilität des dritten Bereichs sich von der Oberflächenkompressibilität des vierten Bereichs unterscheidet.

9. Sitzlehnenanordnung (10) gemäß Anspruch 8, wobei der erste und der zweite Bereich einteilig gebildet sind

10. Sitzlehnenanordnung (10) gemäß Anspruch 8 oder 9, wobei der dritte und vierte Bereich einteilig gebildet sind.

11. Sitzlehnenanordnung (10) gemäß einem vorherigen Anspruch, wobei die erste Stützstruktur (4) feuerbeständige Eigenschaften aufweist.

12. Sitzlehnenanordnung (10) gemäß einem vorherigen Anspruch, ferner umfassend einen Bezug, der sich über mindestens einen Teil der Oberfläche der ersten Stützstruktur (4) erstreckt.

13. Sitz, der eine Sitzlehnenanordnung (10) gemäß einem vorherigen Anspruch aufweist.

14. Verfahren zum Herstellen einer Sitzlehne, umfassend:
Bilden einer ersten Stützstruktur aus einem Schaumstoffmaterial, wobei das Bilden ein Bilden eines ersten und eines zweiten Bereichs aus dem Schaumstoffmaterial umfasst, wobei die geformte Dichte und Stärke des ersten Bereichs sich von der geformten Dichte und Stärke des zweiten Bereichs unterscheidet, und Manipulieren des Schaumstoffmaterials, um eine gewählte Form und/oder Geometrie aufzuweisen, wobei der erste Bereich an einer Position entsprechend dem unteren Rücken eines Insassen in der Verwendung bereitgestellt ist, und der zweite Bereich an einer Position entsprechend dem oberen Rücken eines Insassen in der Verwendung bereitgestellt ist.

15. Verfahren gemäß Anspruch 14, ferner umfassend ein Befestigen der ersten Stützstruktur in Bezug auf eine zweite Stützstruktur, sodass die Schaumstruktur angeordnet ist, um eine Stützstruktur bereitzustellen, gegen die der Oberkörper und/oder Rücken eines Benutzers in der Verwendung ruht.

## Revendications

1. Un ensemble dossier de siège (10) comprenant :
une première structure de support (4), la première structure de support (4) étant faite d'un matériau en mousse et étant configurée pour fournir une structure de support contre laquelle le haut du corps et / ou le dos d'un utilisateur repose en cours d'utilisation, **caractérisé en ce que** la première structure de support comprend des première (5) et deuxième régions, dans lequel la densité et l'épaisseur moulées de la première région (5) sont différentes de la densité et de l'épaisseur moulées de la deuxième région, et dans lequel la première région est prévue à une position correspondant au bas du dos d'un occupant en cours d'utilisation, et la deuxième région est prévue à une position correspondant au haut du dos d'un occupant en cours d'utilisation.

2. Un ensemble dossier de siège (10) selon la revendication 1, dans lequel la première structure de support (4) comprend du polypropylène expansé.

3. Un ensemble dossier de siège (10) selon la revendication 1 ou 2, dans lequel la première structure de support (4) a une densité moulée comprise entre 30 g/litre et 65 g/litre et / ou une fermeté d'au moins 200 N.

4. Un ensemble dossier de siège (10) selon l'une quelconque des revendications précédentes, dans lequel l'ensemble dossier de siège comprend en outre une deuxième structure de support (3).

5. Un ensemble dossier de siège (10) selon la revendication 4, dans lequel la deuxième structure de support (3) comprend un panneau rigide.

6. Un ensemble dossier de siège (10) selon la revendication 5, dans lequel le panneau rigide comprend du plastique moulé et / ou un cadre.

7. Un ensemble dossier de siège (10) selon la revendication 6, dans lequel le cadre comprend de la fibre de carbone.

8. Un ensemble dossier de siège (10) selon l'une quelconque des revendications précédentes, dans lequel la première structure (4) comprend des troisième et quatrième régions, et dans lequel la compressibilité de surface de la troisième région est différente de la compressibilité de surface de la quatrième région.

9. Un ensemble dossier de siège (10) selon la revendication 8, dans lequel les première et deuxième régions sont intégralement formées.

10. Un ensemble dossier de siège (10) selon la revendication 8 ou 9, dans lequel les troisième et quatrième régions sont intégralement formées.

11. Un ensemble dossier de siège (10) selon l'une quelconque des revendications précédentes, dans lequel la première structure de support (4) présente des propriétés de résistance au feu.

12. Un ensemble dossier de siège (10) selon l'une quelconque des revendications précédentes, comprenant en outre une couverture qui s'étend sur au moins une partie de la surface de la première structure de support (4).

13. Un siège ayant un ensemble dossier de siège (10) selon l'une quelconque des revendications précédentes.

14. Un procédé de fabrication d'un dossier de siège, comprenant :
la formation d'une première structure de support à partir d'un matériau en mousse, dans lequel la formation comprend la formation d'une première et deuxième régions à partir du matériau en mousse, dans lequel la densité et l'épaisseur moulées de la première région sont différentes de la densité et de l'épaisseur moulées de la deuxième région, et la manipulation du matériau en mousse de manière à avoir une forme et / ou une géométrie sélectionnée, dans lequel la première région est prévue à une position correspondant au bas du dos d'un occupant en cours d'utilisation, et la deuxième région est prévue à une position correspondant au haut du dos d'un occupant en cours d'utilisation.

15. Un procédé selon la revendication 14 comprenant en outre la fixation de la première structure de support par rapport à une deuxième structure de support de sorte que la structure en mousse est disposée pour fournir une structure de support contre laquelle le haut du corps et / ou le dos d'un utilisateur repose en cours d'utilisation.
